(19) Europäisches Patentamt
European Patent Office
Office européen des brevets

(11) Veröffentlichungsnummer: **0 214 591**
**A2**

(12) # EUROPÄISCHE PATENTANMELDUNG

(21) Anmeldenummer: 86112092.1

(51) Int.Cl.[4]: C 07 F 9/53

(22) Anmeldetag: 02.09.86

(30) Priorität: 11.09.85 DE 3532359

(43) Veröffentlichungstag der Anmeldung: 18.03.87 Patentblatt 87/12

(84) Benannte Vertragsstaaten: BE CH DE FR GB IT LI NL

(71) Anmelder: HOECHST AKTIENGESELLSCHAFT
Postfach 80 03 20
D-6230 Frankfurt am Main 80(DE)

(72) Erfinder: Kleiner, Hans-Jerg, Dr.-Ing.
Altkönigstrasse 11a
D-6242 kronberg/Taunus(DE)

(72) Erfinder: Weiss, Erwin, Dr.
Vorderheide 1
D-6238 Hofheim am Taubnus(DE)

(54) **Verfahren zur Herstellung bifunktioneller tertiärer aromatischer phosphanoxide.**

(57) Tertiäre aromatische Phosphanoxide der Formel

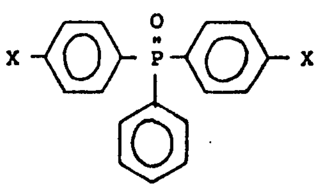

worin X = F, Cl oder Br,
werden hergestellt durch Friedel-Crafts-Reaktion von

a) Phenylthiophosphonsäuredichlorid mit Fluor- Chlor- oder Brombenzol oder

b) von Dichlorphenylphosphan, Schwefel und Fluor-, Chloroder Brombenzol und

c) anschließende Überführung der nach a) oder b) anfallenden Phosphansulfide mit $H_2O_2$ in einem zu mindestens etwa 2 Gew.-%, vorzugsweise zu mindestens etwa 10 Gew.-%, aus gegebenenfalls halogenierten niederen aliphatischen Carbonsäuren und/oder deren Anhydriden und gegebenenfalls noch aus anderen damit mischbaren inerten Lösungsmitteln bestehenden Lösungsmittel.

Die Reaktionsprodukte sind End- und Zwischenprodukte auf verschiedenen Sachgebieten wie z.B. dem Pflanzenschutz- und Polymeren-Sektor.

EP 0 214 591 A2

HOECHST AKTIENGESELLSCHAFT HOE 85/F 192 Dr. ME/Fr

# Verfahren zur Herstellung bifunktioneller tertiärer aromatischer Phosphanoxide

Bifunktionelle tertiäre aromatische Phosphanoxide sind u.a. die Bis-(4-halogenphenyl)-phenyl-phosphanoxide der Formel

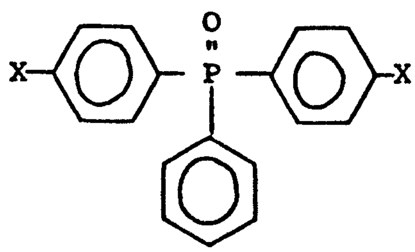

worin X = Halogen.

Sie sind wertvolle End- und Zwischenprodukte auf verschiedenen Sachgebieten wie z.B. auf dem Pflanzenschutz- und dem Polymeren-Sektor.

Endprodukte sind Bis-(4-halogenphenyl)-phenyl-phosphanoxide z.B. auf dem Pflanzenschutzsektor als Insektizide und Akarizide (DE-OS 27 43 848 = US-PS 4 101 655).

Zwischenprodukte sind die Verbindungen z.B. auf dem Polymerensektor. Die Phosphanoxide werden da mit bestimmten Bisphenolen zu wertvollen Polymeren kondensiert (DE-OS 32 03 1869), z.B.:

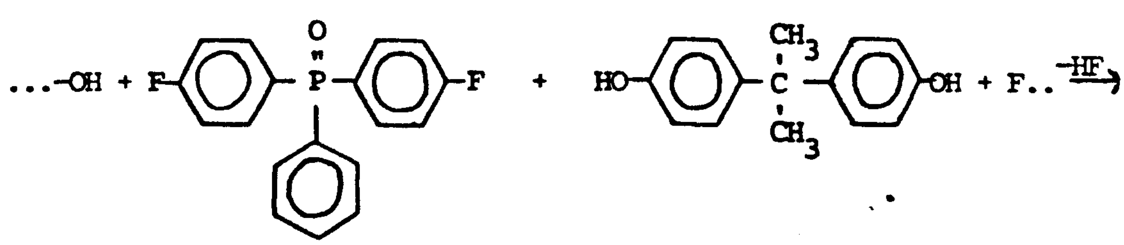

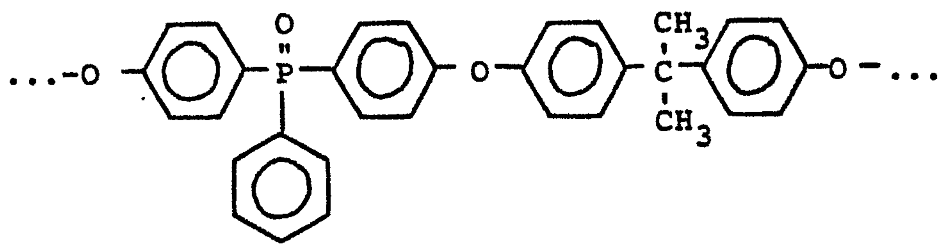

Die Polymeren zeichnen sich durch besondere Schwerbrennbarkeit und extreme thermische Belastbarkeit aus; sie sind zu Fasern, Folien und Formkörpern etc. verarbeitbar.

Die Bis-(4-halogenphenyl)-phenyl-phosphanoxide können - wie in der vorerwähnten DE-OS 27 43 848 angegeben - z.B. durch Grignard-Reaktion von Dichlor-phenyl-phosphan mit Halogenphenylmagnesiumhalogenid sowie anschließender Oxydation hergestellt werden entsprechend den nachstehenden Reaktionsgleichungen (schematisch):

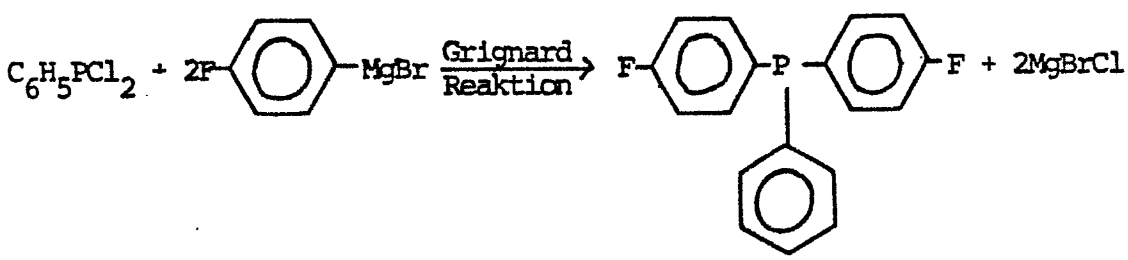


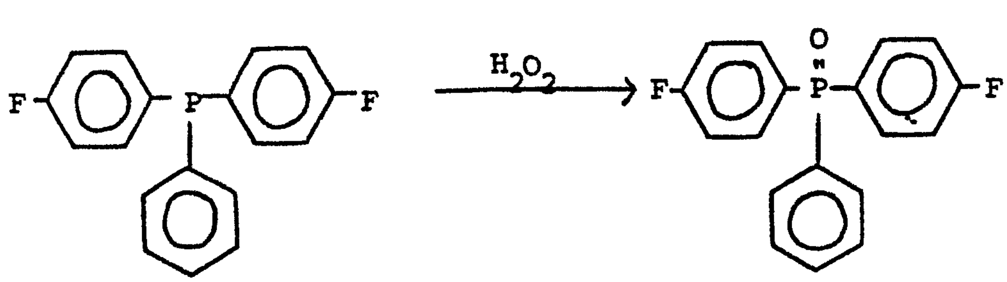

Die Phosphanoxide können alternativ auch durch Grignard-Reaktion von Phenylphosphonsäuredichlorid mit Halogenphenylmagnesiumhalogenid erhalten werden:

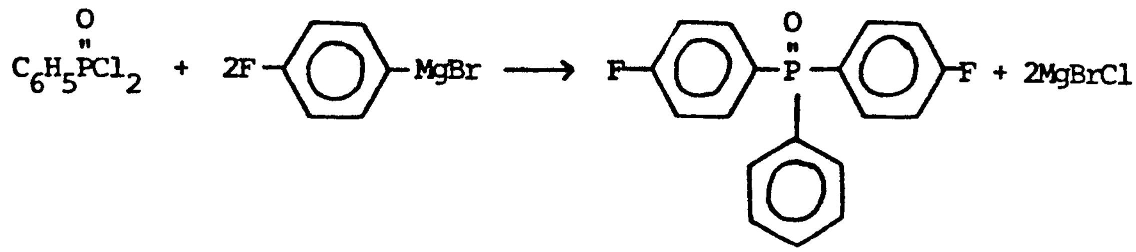

Schließlich ist die Herstellung von arylierten Phosphorthioverbindungen wie z.B. von Bis-(4-halogenphenyl)-phenyl-phosphansulfiden auch nach dem Verfahren der DE-PS 1 238 024 möglich durch Friedel-Crafts-Reaktion von Phosphorthiohalogenid-Verbindungen wie z.B. von Phenylthiophosphonsäuredichlorid $C_6H_5P(S)Cl_2$ mit aromatischen Verbindungen wie z.B. von Halogenbenzolen in Gegenwart einer mindestens äquimolaren Menge eines Friedel-Crafts-Katalysators (insbesondere von $AlCl_3$), bezogen auf die Phosphorthiohalogenid-Verbindung,
und mit einer mindestens äquimolaren Menge der aromatischen Verbindungen, bezogen auf die zu ersetzenden Halogenatome,
mit nachfolgender Zersetzung der entstandenen Katalysatorkomplexverbindung mit Wasser, Eis oder in an sich bekannter Weise durch Zusatz einer Verbindung, die mit dem Katalysator einen stärkeren Komplex bildet als die zu isolierende Phosphorthioverbindung. Für den Fall etwa der Herstellung des Bis-(4-fluorphenyl)-phenyl-phosphansulfids nach diesem Verfahren wäre die entsprechende Reaktionsgleichung:

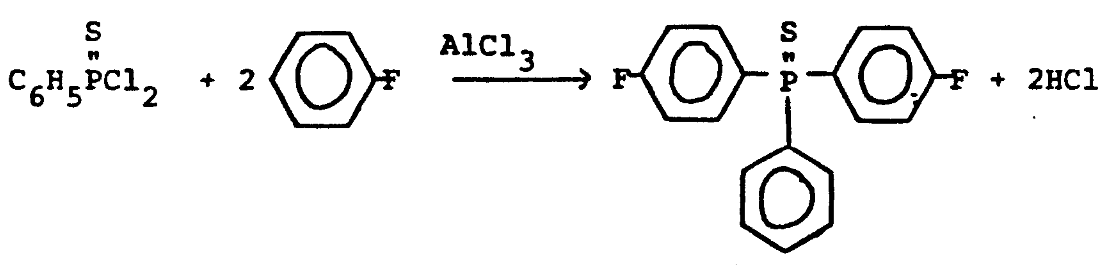

Die Herstellung dieser Verbindung sowie auch anderer Bis-(4-halogenphenyl)-phenyl-phosphansulfide ist jedoch in der genannten DE-PS nicht durch Beispiele belegt. Die einzigen Beispiele, die sich auf die Umsetzung mit einem Halogenbenzol beziehen, sind die Beispiele 7, 8 und 9 (Umsetzung von $PSCl_3$ mit Chlorbenzol) sowie 15 und 16 (Umsetzung von $PSCl_3$ mit Fluorbenzol).

Nach Beispiel 7 werden Phosphorthiochlorid $PSCl_3$, $AlCl_3$ und Chlorbenzol $C_6H_5Cl$ im Molverhältnis 1:5,33:6,67 7 Stunden am Rückfluß erhitzt. Als Ausbeute werden 64 %, bezogen auf eingesetztes $PSCl_3$, Tris-(chlorphenyl)-phosphansulfid $PS(C_6H_4Cl)_3$ angegeben; das Produkt soll gemäß dem IR-Spektrum zu etwa gleichen Teilen des o- und des p-Isomeren bestehen.

In Beispiel 8 beträgt das Molverhältnis $PSCl_3:AlCl_3:C_6H_5Cl$ = 1:2:4. Nach 1 1/4 Stunden Erhitzen am Rückfluß sollen erhalten worden sein:

63,2 % Bis-(chlorphenyl)-thiophosphinsäurechlorid $(C_6H_4Cl)_2P(S)Cl$ (nach Umkristallisation), sowie eine nicht unbeträchtliche Menge eines Rückstandes, der aus einer Mischung aus isomeren Tris-(chlorphenyl)-phosphansulfiden $(C_6H_4Cl)_3PS$ bestanden haben soll.
In Beispiel 9 war das Verhältnis $PSCl_3:AlCl_3:C_6H_5Cl$ = 1:2,5:1. Nach einstündigem Erhitzen zum Rückfluß sollen erhalten worden sein:

45,4 % Chlorphenyl-thiophosphonsäuredichlorid $(C_6H_4Cl)P(S)Cl_2$,
19,7 % Bis-(chlorphenyl)-thiophosphinsäurechlorid $(C_6H_4Cl)_2P(S)Cl$ als Isomerengemisch, und
18,3 % Tris-(chlorphenyl)-phosphansulfid $(C_6H_4Cl)_3P(S)$.

Von Isomerengemischen wird nur bei dem Produkt des

Beispiels 7, dem Rückstand des Beispiels 8 und der Mittelfraktion des Beispiels 9 gesprochen. Es ist jedoch kaum vorstellbar, daß die anderen Chlorphenyl-Produkte dann etwa isomerenrein waren. Daher ist wohl bei allen Reaktionsprodukten von entsprechenden Isomerengemischen auszugehen.

Nach Beispiel 15 wurden $PSCl_3$, $AlCl_3$ und Fluorbenzol $C_6H_5F$ im Molverhältnis 1:5,33:6,67 4 Stunden zum Rückfluß erhitzt. Es sollen 79,5 % praktisch isomerenreines Bis-(4-fluorphenyl)-thiophosphinsäurechlorid $(C_6H_4F)_2P(S)Cl$ mit nur einer Spur des o-Isomeren sowie ein geringfügiger Rückstand erhalten worden sein.

In Beispiel 16 betrug das Molverhältnis von $PSCl_3:AlCl_3:C_6H_5F$ = 1:2,2:1,1. Ergebnis nach 1 3/4-stündigem Erhitzen zum Rückfluß:

23,2 % praktisch reines Fluorphenyl-thiophosphonsäuredichlorid $(C_6H_4F)P(S)Cl_2$,

14,2 % Bis-(fluorphenyl)-thiophosphinsäurechlorid $(C_6H_4F)_2P(S)Cl$ (ohne Angabe der Isomerenreinheit) sowie

eine nicht ganz unbeträchtliche Menge eines braunen Rückstandes.

Aus den Phosphansulfiden könnte man dann die für den Polymerensektor erforderlichen Phosphanoxide durch Umsetzung z.B. mit $SOCl_2$ oder mit Oxidationsmitteln wie $KMnO_4$ oder $HNO_3$ gewinnen; vgl. etwa Helvetica Chimica Acta 47, S. 120-132 (1964), insbesondere S. 124/125 (1964).

In dieser Literaturstelle sind für die Oxidation mit den 3 genannten Reagentien folgende Reaktionsgleichungen angegeben:

$$(ClC_6H_4)_3PS + SOCl_2 \longrightarrow (ClC_6H_4)_3PO + S_2Cl_2$$

$$(CH_3C_6H_4)_3PS + KMnO_4 \xrightarrow{\text{Pyridin}} (HOOCC_6H_4)_3PO$$

$$(C_6H_5)_3PS + HNO_3 \longrightarrow (mO_2NC_6H_4)_3PO$$

Für die Methode mit Thionylchlorid $SOCl_2$ ist die stark korrosive Wirkung dieses Reagens sowie die Bildung des stark geruchsbelästigenden Dischwefeldichlorids $S_2Cl_2$ bei dieser Reaktion nachteilig.

Die Oxidation mit $KMnO_4$ in Pyridin liefert durchweg nur mäßige Ausbeuten an Phosphanoxid und verläuft - wie aus der vorstehenden Reaktionsgleichung ersichtlich - im Falle des Einsatzes von kernalkylierten aromatischen Phosphansulfiden unter Oxidation der am aromatischen Kern befindlichen Alkylgruppe zur Carboxylgruppe.

Bei der Umsetzung mit konzentrierter Salpetersäure findet außer der Phosphanoxid-Bildung gleichzeitig eine Nitrierung der vorhandenen aromatischen Kerne statt.

Eine günstigere Methode der Oxidation von tertiären Phosphansulfiden in die entsprechenden Phosphanoxide ist die von A.M. Aguiar et al. in J. Org. Chem. 34, S. 3349-3352, insbesondere S. 3351 rechte Spalte, letzter Absatz (1969) offenbarte Wasserstoffperoxid-Methode. Die Methode wurde anhand der Oxidation des Dimethyl-1-butinylphosphansulfids mit einem etwa 75 %igen Überschuß an $H_2O_2$ in Methanol beschrieben:

$$(CH_3)_2\overset{\overset{S}{\parallel}}{P}-C\equiv C-C_2H_5 + H_2O_2 \xrightarrow{\text{in } CH_3OH} (CH_3)_2\overset{\overset{O}{\parallel}}{P}-C\equiv C-C_2H_5 + H_2O$$

Nach zweitätigem Stehen des Ansatzes und entsprechender Aufarbeitung soll die Ausbeute an Dimethyl-1-butinylphosphanoxid 61 % betragen haben. Wegen der langen Reaktionszeit, der nur mäßigen Ausbeute sowie auch der Notwendigkeit der Aufarbeitung des im Überschuß eingesetzten Wasserstoffperoxids ist auch diese Methode nicht befriedigend.

Es bestand daher die Aufgabe, ein verbessertes Verfahren zur Herstellung von Bis-(4-halogenphenyl)-phenyl-phosphanoxiden zu finden.

Diese Aufgabe konnte erfindungsgemäß durch eine Weiterentwicklung des in DE-PS 12 38 024 beschriebenen Verfahrens mit Überführung der anfallenden rohen Phosphansulfide in die entsprechenden Phosphanoxide gelöst werden.

Erfindungsgegenstand ist daher ein Verfahren zur Herstellung tertiärer aromatischer Phosphanoxide der Formel

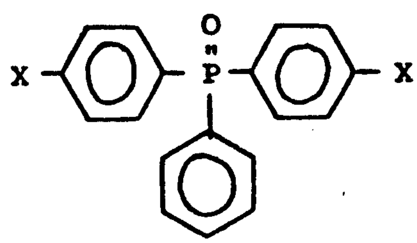

worin X = F, Cl oder Br,
durch Friedel-Crafts-Reaktion von Phenylthiophosphonsäurechlorid mit einem Halogenbenzol und anschließender Überführung der anfallenden rohen Phosphansulfide durch eine oxidative Behandlung mit $H_2O_2$ in die entssprechenden Phosphanoxide;
das Verfahren ist dadurch gekennzeichnet, daß man

a) Phenylthiophosphonsäuredichlorid mit Aluminiumhalogenid und Halogenaromaten $C_6H_5X$, worin X die vorerwähnte Bedeutung besitzt, im Molverhältnis 1:etwa (2-3,5):etwa (2-20) bis zur Beendigung der Reaktion erhitzt oder
b) Dichlorphenylphosphan mit einem Gemisch aus Schwefel, Aluminiumhalogenid und Halogenaromaten $C_6H_5X$, worin X die vorerwähnte Bedeutung besitzt, im Molverhältnis 1:etwa 1: etwa (2-3,5): etwa (2-20) bis zur Beendigung der Reaktion erhitzt, und

c) die nach der hydrolytischen Aufarbeitung und gegebenenfalls dem Abdestillieren von überschüssigen Halogenaromaten nach a) oder b) anfallenden rohen Phosphansulfide mit Wasserstoffperoxid in einem Lösungsmittel umsetzt, welches zu mindestens etwa 2 Gew.-%, vorzugsweise zu mindestens etwa 10 Gew.-% aus - gegebenenfalls halogenierten - niederen aliphatischen Carbonsäuren und/oder durch Anhydriden und gegebenenfalls noch aus anderen damit mischbaren inerten Lösungsmitteln, besteht.

Den Verfahrensstufen a), b) und c) liegen folgende Reaktionsgleichungen zugrunde:

a) $$C_6H_5P(S)Cl_2 + 2X\text{-}C_6H_5 \xrightarrow{AlCl_3} C_6H_5\overset{S}{\overset{\|}{P}}(C_6H_4X)_2 + 2HCl$$

b) $$C_6H_5PCl_2 + S \xrightarrow{AlCl_3} C_6H_5P(S)Cl_2$$

$$C_6H_5P(S)Cl_2 + 2C_6H_5X \xrightarrow{AlCl_3} C_6H_5\overset{S}{\overset{\|}{P}}(C_6H_4X)_2 + 2HCl$$

c) $$C_6H_5\overset{S}{\overset{\|}{P}}(C_6H_4X)_2 + H_2O_2 \longrightarrow C_6H_5\overset{O}{\overset{\|}{P}}(C_6H_4X)_2 + 1/8S_8 + H_2O$$

Nach diesem Verfahren (und zwar sowohl nach Variante a) als auch nach b)) werden in weitaus überwiegendem Maße die Bis-(4-halogenphenyl)-phenyl-phosphansulfide gebildet, durch die Oxidation nach c) werden diese in nahezu quantitativen Ausbeuten in die entsprechenden Phosphanoxide überführt. Die Gesamtausbeuten an Phosphanoxiden liegen durchweg zwischen etwa 65 und 90 % d.Th., bezogen auf die Ausgangsphosphorkomponente Phenylthiophosphonsäuredichlorid $C_6H_5P(S)Cl_2$ bzw. Dichlorphenylphosphan $C_6H_5PCl_2$, neben nur relativ wenig Isomeren und anderen Nebenprodukten. Dies ist vor allem deswegen überraschend, jedenfalls im Falle der Reaktion mit Chlorbenzol, weil gemäß DE-PS 12 38 024 (Beispiel 7) aus $PSCl_3$, $AlCl_3$ und Chlorbenzol im Molverhältnis 1:5,33:6,67 nach 7 Stunden 64 % Tris-(chlorphenyl)-phosphansulfid gewonnen wird, das aus etwa gleichen Teilen aus den o- und p-Isomeren besteht,

entsprechend einer Gesamtausbeute von ca. 32 % an isomerenreinem Produkt.

Weiterhin liefert nach Beispiel 8 der DE-PS 12 38 024 die Reaktion von $PSCl_3$, $AlCl_3$ und Chlorbenzol im Molverhältnis 1:2:4 nach 1 1/4 Stunden Rückfluß 63,2 % an einem Gemisch aus etwa gleichen Teilen o- und p-Bis(chlorphenyl)-thiophosphinsäurechlorid, was eine Ausbeute an reinem Bis-(4-chlorphenyl)-thiophosphinsäurechlorid von etwa 30 - 35 % d.Th. bezogen auf die eingesetzte Phosphorkomponente bedeutet. Eine ähnliche Isomerenverteilung wäre auch bei der Friedel-Crafts-Reaktion zwischen Phenyl-thiophosphonsäurechlorid und Chlorbenzol für Bis-(chlorphenyl)-phenylphosphansulfid bzw. nach der Oxidation gemäß Teilschritt c) auch für das entsprechende Oxid zu erwarten. Tatsächlich finden sich aber nach $^{31}P$-NMR und GC-Untersuchungen nur bis zu maximal etwa 10 % der Isomeren (2-Chlorphenyl)-(4-chlorphenyl)-phenylphosphanoxid und (3-Chlorphenyl)-(4-chlorphenyl)-phenylphosphanoxid nben 90,0 - 96 % Bis-(4-chlorphenyl)-phenylphosphanoxid.

Nach Beispiel 15 der DE-PS 12 38 024 werden $PSCl_3$, $AlCl_3$ und Fluorbenzol $C_6H_5F$ im Molverhältnis 1:5,33:6,67 4 Stunden am Rückfluß erhitzt. Es sollen 79,5 % d.Th. praktisch isomerenreines Bis-(4-fluorphenyl)-thiophosphinsäurechlorid $(4\text{-}F\text{-}C_6H_4)_2P(S)Cl$ mit nur einer Spur des o-Isomeren sowie einem geringfügigen Rückstand erhalten werden. Selbst bei dem Molverhältnis von Fluorbenzol/$PSCl_3$ = 6,67:1 werden kaum tertiäre aromatische Phosphansulfide gebildet. Überraschenderweise wurde gefunden, daß nach dem erfindungsgemäßen Verfahren Phenylthiophosphonsäurechlorid als solches nach Variante a), oder in einer Art Eintopfreaktion (weil keine Zwischenprodukte isoliert werden) nach der Variante b) aus Dichlorphenylphosphan und Schwefel im Reaktionsgemisch erzeugt, ohne Schwierigkeiten zu Bis-(4-fluorphenyl)-phenylphosphansulfid aryliert werden

kann. Durch Oxidation des nach Variante b) erhaltenen, ungereinigten Rohproduktes nach dem Verfahrensschritt c) werden so ca. 85 % d.Th. (bezüglich der Phosphorkomponente) Bis-(4-fluorphenyl)-phenyl-phosphanoxid erhalten. Dieses muß zwangsläufig vorher als Phosphansulfid vorgelegen haben.

Als Aluminiumhalogenide werden für das erfindungsgemäße Verfahren vorzugsweise $AlCl_3$, $AlBr_3$ sowie Alkyl-aluminiumchlorid und -bromid eingesetzt; besonders bevorzugt ist $AlCl_3$.

Als Halogenaromaten $C_6H_5X$ kommen Fluor-, Chlor- und Brombenzol infrage, wobei Fluor- und Chlorbenzol bevorzugt sind.

Die Überführung der nach a) oder b) hergestellten rohen Phosphansulfide mit Wasserstoffperoxid in niedrigen aliphatischen Carbonsäuren und/oder deren Anhydriden gegebenenfalls in Anwesenheit eines weiteren inerten Lösungsmittels nach Verfahrensstufe c) verläuft in kurzen Reaktionszeiten ohne die Bildung von störenden Nebenprodukten mit quantitativen oder nahezu quantitativen Ausbeuten an dem jeweiligen Phosphanoxid. Dies ist im Hinblick auf die nur mäßige Ausbeute bei der Oxidation mit $H_2O_2$ in reinem Methanol (vgl. A.M. Aguiar et al. in J. Org. Chem. 34, S. 3349 (1969)), sowie auch - wie eigene Versuche ergeben haben - des negativen Ergebnisses des Versetzens tertiärer Phosphansulfide mit $H_2O_2$ in anderen Lösungsmitteln (Acetonitril, Aceton etc.) außerordentlich überraschend.

Als gegebenenfalls halogensubstituierte niedere aliphatische Carbonsäuren kommen vorzugsweise aliphatische $C_1$-$C_6$-Carbonsäuren in Frage, die noch durch ein oder mehrere Halogenatome, vorzugsweise F und/oder Cl, substituiert sein können. Beispielhafte solche Carbonsäuren sind:

Ameisensäure
Essigsäure
Propionsäure
Monochloressigsäure
Monofluoressigsäure
Trifluoressigsäure etc.

Die Carbonsäuren sowie deren Anhydride können sowohl einzeln als auch in Mischung miteinander verwendet werden. Sie sollen mindestens etwa 2 Gew.-% vorzugsweise mindestens etwa 10 Gew.-% des Gesamtlösungsmittels ausmachen.

Es ist besonders bevorzugt, wenn diese Carbonsäuren und/oder deren Anhydride alleiniges Lösungsmittel sind. Ganz besonders bevorzugt ist Essigsäure als alleiniges Lösungsmittel.

Falls die genannten Carbonsäuren und/oder deren Anhydride nicht als alleinige Lösungsmittel eingesetzt werden, müssen die Mischungskomponenten mit den Carbonsäuren und/oder deren Anhydriden mischbar sein; außerdem dürfen sie natürlich mit dem Wasserstoffperoxid sowie den Ausgangs- und Endprodukten der Reaktion nicht in unerwünschter Weise reagieren. In Frage kommende derartige Mischungskomponenten sind daher z.B. Wasser, niedere ($C_1$-$C_6$)-Alkohole wie z.B. Methanol, Ethanol, n-Propanol, i-Propanol, n-Butanol, i-Butanol, tert.-Butanol, Cyclohexanol, etc., niedere aliphatische halogenierte Kohlenwasserstoffe wie z.B Methylenchlorid, 1,2-Dichlorethan etc., aromatische Kohlenwasserstoffe wie z.B. Toluol oder Xylol, aromatische Chlorkohlenwasserstoffe wie z.B. Chlorbenzol, Fluorbenzol etc.

Die Mischungskomponenten Wasser und Alkohole sind nur sinnvoll in Mischung mit den vorerwähnten Carbonsäuren, nicht mit deren Anhydriden, weil sich mit den Anhydriden die Säuren bzw. Ester bilden. Wenn die Säuren als Lösungsmittel beabsichtigt sind, werden sie vorteilhaft gleich als solche eingesetzt und nicht erst aus den Anhydriden und Wasser erzeugt.

Je weniger mischbar die zusätzlichen Lösungsmittelbestandteile mit den Carbonsäuren und/oder deren Anhydriden sind, desto niedriger kann natürlich auch nur ihr Anteil an der entsprechenden Lösungsmittelmischung sein.

Wasserstoffperoxid kann als etwa 3 bis 85 %-ige wässrige Lösung eingesetzt werden, zweckmäßig in der handelsüblichen Form (etwa 30 - 35 %-ig). Vorzugsweise wird das Wasserstoffperoxid in etwa äquimolarer Menge, bezogen auf die Phosphor-Schwefel-Verbindung verwendet. Falls weitere oxidierbare Verunreinigungen vorhanden sind, ist natürlich ein Mehrverbrauch an Wasserstoffperoxid zu beobachten. Weitere Überschüsse sind möglich, aber nicht mehr von Vorteil.

Zur Durchführung der Variante a) des erfindungsgemäßen Verfahrens werden Phenylthiophosphonsäuredichlorid, Aluminiumhalogenid und Halogenaromat in einen geeigneten Gefäß zusammengegeben, wobei das Molverhältnis der 3 genannten Reaktanten 1:etwa (1-3,5):etwa (2-20), vorzugsweise 1:etwa (1-2,45):etwa(4-12) beträgt.

Auch weitere Überschüsse von Aluminiumhalogenid oder Halogenaromaten sind möglich, aber nicht mehr von Vorteil.

Variante b) des erfindungsgemäßen Verfahrens geht aus von Dichlor-phenyl-phosphan, Schwefel, Aluminiumhalogenid und Halogenaromat im Molverhältnis 1:etwa1:etwa (1-3,5):etwa (2-20), vorzugsweise 1:etwa 1:etwa (1-2,5):etwa (4-12). Auch hier sind weitere Überschüsse an Aluminiumhalogenid und Halogenaromat möglich, aber nicht mehr von Vorteil.

Als vorteilhaft wirkt sich hierbei aus, daß die - technisch nur schwierig zu beherrschende - hohe Wärmetönung der Reaktion zwischen Dichlorphenylphosphan und Schwefel durch die große Wärmekapazität der Reaktionsmasse ohne gefährlichen Temperaturanstieg aufgenommen wird.

Das weitere Vorgehen in den Varianten a) und b) des erfindungsgemäßen Verfahrens unterscheidet sich nicht mehr. Die Reaktionsmischung wird nun - vorzugsweise unter Rückfluß - solange erhitzt, bis die Reaktion beendet ist. Die Reaktionstemperatur beträgt im allgemeinen zwischen etwa 70 und 150°C, die Reaktionszeit zwischen etwa 4 und 70 Stunden.

Es ist zweckmäßig, das Erhitzen unter Inertgasatmosphäre (z.B. Stickstoff oder Argon) durchzuführen.

Das Ende der Friedel-Crafts-Reaktion ist aus der Beendigung der Halogenwasserstoffentwicklung (siehe die Reaktionsgleichungen) oder durch Verfolgung des Reaktionsfortganges auf übliche Weise (z.B. mit chromatographischen Methoden, insbesondere durch $^{31}P$-NMR-Spektroskopie) erkennbar.

In beiden Varianten a) und b) des erfindungsgemäßen Verfahrens können auch inerte Lösungsmittel - insbesondere zwecks Regulierung der Reaktionstemperatur, wenn am Rückfluß erhitzt wird - zugesetzt werden. Solche inerten Lösungsmittel können z.B. sein:

aliphatische Kohlenwasserstoffe wie Petrolether, Hexan, Oktan;
cycloaliphatische Kohlenwasserstoffe wie Cyclohexan, Hydroaromaten wie Dekalin etc.

Die Aufarbeitung der Friedel-Crafts-Reaktionsmischung erfolgt nach im Prinzip bekannten Methoden. Sie umfaßt immer

die nachfolgende Behandlung mit Wasser. Beispielsweise wird die Reaktionslösung - zweckmäßig unter Kühlung - in Wasser eingetragen oder auf gekörntes Eis gegossen. Zur besseren Phasentrennung kann - falls nicht schon vorhanden - u.U. ein geeignetes organisches inertes Lösungsmittel zugesetzt werden, wofür auch die vorher genannten inerten Lösungsmittel oder weiterer Halogenaromat, Methylenchlorid, Toluol etc. in Frage kommen.

Die gesamte anfallende organische Phase wird - eventuell nach einem weiteren Waschvorgang mit Wasser - einer Destillation unterworfen, falls Lösungsmittel oder überschüssiger Halogenaromat abzutrennen sind. Die dabei anfallenden Destillationsrückstände stellen im wesentlichen die gewünschten Bis-(4-halogenphenyl)-phenyl-phosphansulfide dar. Diese können ohne weitere Reinigung der Oxidationsstufe c) zugeführt werden. Dazu wird das Phosphansulfid in einem Lösungsmittel aufgenommen, welches zu mindestens etwa 2 Gew.-% aus - gegebenenfalls halogenierten - niederen aliphatischen Carbonsäuren und/oder deren Anhydriden, und zum Rest aus damit mischbaren anderen inerten Lösungsmitteln besteht.

Das Verhältnis Phosphansulfid zu Gesamtlösungsmittel kann innerhalb weiter Grenzen variiert werden; vorzugsweise liegt das Gewichtsverhältnis bei etwa 1:(1-20). Zu der Lösung oder Suspension wird bei Temperaturen zwischen etwa -5 und +100°C, vorzugsweise zwischen etwa +40 und +80°C, oder bei Verwendung eines hohen Anteils an Alkohol wie Methanol (als Lösungsmittelkomponente) auch unter Rückflußbedingungen, Wasserstoffperoxid als wässrige Lösung zudosiert. Da die Reaktion exotherm verläuft, ist gegebenenfalls Kühlung erforderlich.

Das Ende der Reaktion kann leicht durch chromatographische oder spektroskopische Methoden festgestellt werden. Bei Verwendung der rohen Phosphansulfide wird häufig ein geringer Mehrverbrauch an Wasserstoffperoxid - bedingt durch oxidierbare Verunreinigungen - festgestellt.

Die Aufarbeitung des Reaktionsgemisches erfolgt in an sich bekannter Weise durch Filtration der abgekühlten Lösung von dem in elementarer Form anfallenden Schwefel.

Besonders günstig wirkt sich hier die sehr geringe Löslichkeit des elementaren Schwefels in Carbonsäuren und/oder deren Anhydriden wie auch in deren Gemischen mit anderen damit mischbaren inerten Lösungsmitteln - insbesondere in Essigsäure-Methanol-Gemischen - sowie auch die sehr gute Löslichkeit von tertiären Phosphanoxiden in diesen Lösungsmittel(-gemische)n - auch in Gegenwart des durch die Reaktionsführung unvermeidlichen Wasseranfalls - aus.

Nach dem Abdestillieren des Lösungsmittels (vorzugsweise in Vakuum) bleiben die rohen Phosphanoxide zurück.

Die weitere Reinigung der Rohprodukte erfolgt zweckmäßig durch Aufrühren mit Wasser und Auswaschen von sauren Verunreinigungen mit verdünnten Laugen. Die Phosphanoxide fallen dabei häufig in Form ihrer Hydrate kristallin aus. Diese können abfiltriert oder - falls flüssig - als zweite Phase abgetrennt werden. Die weitere Reinigung erfolgt in an sich bekannter Weise durch Destillation oder Kristallisation.

Wegen der einfachen Durchführbarkeit der Reaktion, der kurzen Reaktionszeiten und der hohen Phosphanoxid-Ausbeuten stellt das Verfahren einen erheblichen Fortschritt auf diesem Gebiet dar.

Ein weiterer Fortschritt besteht darin, daß in einer dergestalt vielstufigen Synthese nur auf der Stufe des Endproduktes gereinigt werden muß.

Ebenfalls als bedeutender Fortschritt ist zu erwähnen, daß bei der Oxidation mit Wasserstoffperoxid nach dem erfindungsgemäßen Verfahren kein oder nur ein äußerst geringer Überschuß an Wasserstoffperoxid verwendet werden muß (im Gegensatz zu dem von A.M. Aguiar et al. a.a.O. geschilderten Verfahren), was die Aufarbeitung erheblich erleichtert und aus sicherheitstechnischen Gründen auch sehr erwünscht ist.

Die nachfolgenden Beispiele sollen der weiteren Erläuterung der Erfindung diesen:

Beispiel 1

Bis-(4-fluorophenyl)-phenyl-phosphanoxid
(Variante a)

422,1 g (2 Mol) Benzolthiophosphonsäuredichlorid
666,7 g (5 Mol) Aluminiumchlorid
1153,3 g (12 Mol) Fluorbenzol

Molverhältnis = 1:2,5:6) wurden unter Rühren in einer Stickstoffatmosphäre gemischt. Dann wurde zum Rückfluß erhitzt und 18 Stunden am Rückfluß gekocht. Am Ende ergab sich eine Reaktionstemperatur von 97°C. Es wurde abgekühlt und die Reaktionsmischung auf 5 kg Eis gegossen. Die Phasen wurden getrennt und die wässrige Phase nochmals mit 200 ml Chlorbenzol nachgewaschen. Die vereinigten organischen Phasen wurden im Vakuum von überschüssigem Lösungsmittel befreit und der ölige Rückstand bei 60°C in 900 ml Essigsäure gelöst. Bei dieser Temperatur wurden

200 g einer 35 %igen Wasserstoffperoxid-Lösung (≙2,06 Mol; 3 % Überschuß) im Verlauf von 4 Stunden zugetropft. Schwefel wurde abfiltriert und das Filtrat bei zuletzt 100°C/20 mbar eingedampft. Der Rückstand wurde in

1000 g Chlorbenzol aufgenommen und 2N-NaOH bis zur alkalischen Reaktion zugegeben.

Nach der Phasentrennung wurde die organische Phase nochmals mit Wasser nachgewaschen und das Lösungsmittel im Vakuum abgezogen. Es wurden 540 g rohes Phosphanoxid erhalten, das im Hochvakuum destilliert (Kp 0,1 mbar = 191°C) und anschließend aus Toluol/Cyclohexan umkristallisiert wurde. Man erhielt 425 g (67,6 % d. Th.) reines Bis-(4-fluorophenyl)-phenylphosphanoxid Fp. 126-127°C.

Beispiel 2

Bis-(4-fluorphenyl)-phenyl-phosphanoxid
(Variante b)

268,5 g (1,5 Mol) Dichlorphenylphosphan
48,1 g (1,5 Mol) Schwefel
500 g (3,75 Mol) Aluminiumchlorid
865 g (9 Mol) Fluorbenzol
(Molverhältnis 1:1:2,5:6) wurden unter Schutzgasatmosphäre gemischt (Reihenfolge der Zugabe: 1. $AlCl_3$, 2. Schwefel, 3. Fluorbenzol, 4. Dichlorphenylphosphan) und nach Abklingen der Selbsterwärmung mit
300 ml Cyclohexan versetzt.
Es wurde 67 Stunden am Rückfluß gekocht, abgekühlt und die Reaktionsmischung unter Außenkühlung bei max. 20°C in 2 l Wasser eingetroft. Die Phasen wurden getrennt, die organische Phase nochmals mit Wasser gewaschen, im Vakuum eingedampft und der Rückstand in einer Mischung aus
100 ml Eisessig/900 ml Methanol gelöst. Bei 50°C wurden
181 g 35 %iges Wasserstoffperoxid (25 % Überschuß) eingetropft, 3 Stunden bei 50°C nachgerührt, auf 20°C abgekühlt, Schwefel abfiltriert und das Filtrat im Vakuum eingedampft. Der beim Abkühlen kristallisierende Rückstand wurde in 500 ml Wasser aufgeschmolzen, mit Natronlauge bis zur alkalischen Reaktion versetzt, nochmals mit Wasser gewaschen und schließlich destilliert. (Kp 0,1 mbar = 191 °C). Man erhielt 400 g eines nahezu farblosen rasch kristallisierenden Öls, das laut GC zu 92,96 % aus Bis-(4-fluorophenyl)-phenylphosphanoxid bestand.
Dem entspricht eine Gesamtausbeute von 78,9 % der Theorie.

Beispiel 3

Bis-(4-fluorphenyl)-phenyl-phosphanoxid
(Variante b)

| | | | |
|---|---|---|---|
| 357,98 | g | (2 Mol) | Dichlorphenylphosphan |
| 64,12 | g | (2 Mol) | Schwefel |
| 666,7 | g | (5 Mol) | Aluminiumchlorid und |
| 1153,3 | g | (12 Mol) | Fluorbenzol |

(Molverhältnis 1:1:2,5:6, Reihenfolge der Zugabe: 1. $AlCl_3$, 2. Schwefel, 3. Fluorbenzol, 4. Dichlorphenylphosphan) wurden 28 Stunden am Rückfluß gehalten.

Die weitere Aufarbeitung erfolgte völlig analog Beispiel 1.

Nach der Kristallisation wurden 520,52 g reines Bis-(4-fluorphenyl)-phenylphosphanoxid erhalten (Ausbeute 82,8 % d.Th.).

Beispiel 4

Bis-(4-fluorophenyl)-phenyl-phosphanoxid
(Variante b)

| | | | |
|---|---|---|---|
| 357.97 | g | (2 Mol) | Dichlorphenylphosphan |
| 64,12 | g | (2 Mol) | Schwefel |
| 586,7 | g | (4,4 Mol) | Aluminiumchlorid |
| 1350,7 | g | (12 Mol) | Chlorbenzol |

(Molverhältnis 1:1:2,2:6, Reihenfolge der Zugabe: 1. $AlCl_3$, 2. Schwefel, 3. Chlorbenzol, 4. Dichlorphenylphosphan) wurden 9 Stunden zum Rückfluß erhitzt.

Die weitere Aufarbeitung erfolgte analog Beispiel 1, auf eine Destillation wurde jedoch verzichtet.

Nach der Kristallisation aus Cyclohexan/Toluol wurden 484 g Bis-(4-fluorophenyl)-phenylphosphanoxid (Fp. 103 - 105°C) erhalten; Ausbeute: 70 % d.Th.

Beispiel 5

Bis-(4-fluorphenyl)-phenyl-phosphanoxid
(Variante b)

| | | | |
|---|---|---|---|
| 17,9 | g | (0,1 Mol) | Dichlorphenylphosphan |
| 3,2 | g | (0,1 Mol) | Schwefel |
| 29,3 | g | (0,22 Mol) | Aluminiumchlorid |
| 67,5 | g | (0,6 Mol) | Chlorbenzol |

wurden 7 Stunden am Rückfluß erhitzt. Die Aufarbeitung erfolgte völlig analog Beispiel 1, allerdings wurde hier eine Kugelrohrdestillation durchgeführt (225°C Ofentemperatur/0,1 mbar).

Man erhielt

30 g eines Produktes mit der Isomerenverteilung

88,7 % Bis-(4-chlorphenyl)-phenylphosphanoxid
6,2 % } Isomere
3,6 % }
1,5 % Verunreinigungen.

Dem entspricht eine Gesamtausbeute von 76,6 % d.Th. an gewünschtem Produkt.

Beispiel 6

Bis-(4-chlorphenyl)-phenyl-phosphanoxid
(Variante b)

| | | | |
|---|---|---|---|
| 89,5 | g | (0,5 Mol) | Dichlorphenylphosphan |
| 16,03 | g | (0,5 Mol) | Schwefel |
| 220,1 | g | (1,65 Mol) | Aluminiumchlorid |
| 450 | g | (4 Mol) | Chlorbenzol |

(Molverhältnis: 1:1:3,3:8, Reihenfolge der Zugabe: 1. $AlCl_3$, 2. Schwefel, 3. Chlorbenzol, 4. Dichlorphenylphosphan) wurden 6,5 Stunden zum Rückfluß erhitzt. Nach der Hydrolyse, Phasentrennung, Trocknung über Natriumsulfat und

Abziehen des Lösemittels bei 100°C/0,5 mbar wurde aus dem Rückstand das Isomerenverhältnis der entstandenen Phosphansulfide bestimmt.

Es wurden

| | |
|---|---|
| 91,6 % | Bis-(4-chlorphenyl)-phenylphosphansulfid |
| 7,9 % | Isomere Bis-(chlorphenyl)-phenylphosphansulfide |
| 0,5 % | Phenyl(4-chlorphenyl)-thiophosphinsäurechlorid |

gefunden.

Die weitere Aufarbeitung erfolgte analog Beispiel 1 durch Umsetzung mit 64,4 g 35 %igen Wasserstoffperoxids (33 % Überschuß) in 500 ml Eisessig. Nach der Filtration und Abziehen des Lösungsmittels sowie Alkali-Wäsche wurden 146 g eines Produktes erhalten, das laut $^{31}P$-NMR zu 94,4 % aus dem gewünschten Bis-(4-chlorphenyl)-phenyl-phosphanoxid bestand. Dem entspricht eine Gesamtausbeute von 79,4 % d.Th.

0214591

HOE 85/F 192

Patentansprüche:

1. Verfahren zur Herstellung tertiärer aromatischer Phosphanoxide der Formel

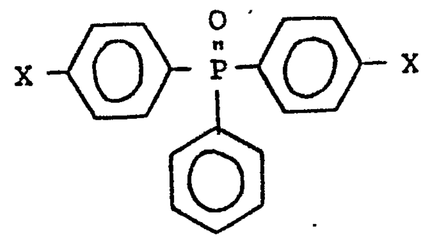

worin X = F, Cl und Br, durch Friedel-Crafts-Reaktion von Phenylthiophosphonsäurechlorid mit einem Halogenbenzol und anschließender Überführung der anfallenden rohen Phosphansulfide durch eine oxidative Behandlung mit $H_2O_2$ in die entsprechenden Phosphanoxide,

dadurch gekennzeichnet, daß man

a) Phenylthiophosphonsäuredichlorid mit Aluminiumhalogenid und Halogenaromaten $C_6H_5X$, worin X die vorerwähnte Bedeutung besitzt, im Molverhältnis 1:etwa (2-3,5):etwa (2-20) bis zur Beendigung der Reaktion erhitzt oder

b) Dichlorphenylphosphan mit einem Gemisch aus Schwefel, Aluminiumhalogenid und Halogenaromaten $C_6H_5X$, worin X die vorerwähnte Bedeutung besitzt im Molverhältnis 1:etwa 1:etwa (2-3,5):etwa (2-20) bis zur Beendigung der Reaktion erhitzt und

c) die nach der hydrolytischen Aufarbeitung und gegebenenfalls dem Abdestillieren von überschüssigem Halogenaromaten nach a) oder b) anfallenden rohen Phosphansulfide mit Wasserstoffperoxid in einem Lösungsmittel umsetzt, welches zu mindestens etwa 2 Gew.-%, vorzugsweise zu mindestens etwa 10 Gew.-% aus - gegebenenfalls halogenierten - niederen aliphatischen Carbonsäuren und/oder Anhydriden und gegebenenfalls noch aus anderen damit mischbaren inerten Lösungsmitteln, besteht.

 0214591

2. Verfahren nach Anspruch 1, ddurch gekennzeichnet, daß man als Aluminiumhalogenid Aluminiumchlorid $AlCl_3$ verwendet.

3. Verfahren nach den Ansprüchen 1 und 2, dadurch gekennzeichnet, daß man als Halogenaromaten $C_6H_5X$ Fluoro- oder Chlorbenzol verwendet.

4. Verfahren nach den Ansprüchen 1 bis 3, dadurch gekennzeichnet, daß man sowohl in der Variante a) als auch in der Variante b) das Erhitzen bis zur Beendigung der Reaktion bei Temperaturen zwischen etwa 70°C und 150°C durchführt.

5. Verfahren nach den Ansprüchen 1 bis 4, dadurch gekennzeichnet, daß man die oxidative Behandlung bei Temperaturen zwischen etwa -5 und +100°C, vorzugsweise zwischen etwa +40°C und +80°C durchführt.